(19) Europäisches Patentamt / European Patent Office / Office européen des brevets

(11) **EP 1 612 727 B1**

(12) **EUROPEAN PATENT SPECIFICATION**

(45) Date of publication and mention
of the grant of the patent:
**25.02.2009 Bulletin 2009/09**

(51) Int Cl.:
***G06T 1/00*** *(2006.01)*

(21) Application number: **05291338.1**

(22) Date of filing: **22.06.2005**

(54) **Zero knowledge proof and detection of watermarks in multimedia entities**

Nullkenntnis Detektierung und Beweis von Wasserzeichen in Multimedia Einheiten

Détection et preuve avec un protocole "Zero Knowledge" de tatouages numériques dans des entités multimédia

(84) Designated Contracting States:
**DE FR GB**

(30) Priority: **28.06.2004 FR 0407083**

(43) Date of publication of application:
**04.01.2006 Bulletin 2006/01**

(73) Proprietors:
• **Canon Research Centre France
35510 Cesson-Sevigne (FR)**
• **Institut National de Recherche en Informatique et Automatique
78153 Le Chesnay (FR)**

(72) Inventors:
• **Chieze, Quentin
78370 Plaisir (FR)**
• **Pateux, Stephane
35760 Saint Gregoire (FR)**
• **Levy-dit-Vehel, Françoise
75015 Paris (FR)**
• **Nguyen, Eric
35000 Rennes (FR)**

(74) Representative: **Santarelli
14, avenue de la Grande Armée,
B.P. 237
75822 Paris Cedex 17 (FR)**

(56) References cited:
**WO-A-20/04043072**

• **ANDRÉ ADELSBACH AND AHMAD-REZA SADEGHI: "Zero-Knowledge Watermark Detection and Proof of Ownership" INFORMATION HIDING, FOURTH INTERNATIONAL WORKSHOP, [Online] 2001, pages 273-288, XP002315577 BERLIN Retrieved from the Internet: URL:http://www-krypt.cs.uni-sb.de/research /publications/> [retrieved on 2005-01-28]**
• **MALVAR H S ET AL: "IMPROVED SPREAD SPECTRUM: A NEW MODULATION TECHNIQUE FOR ROBUST WATERMARKING" IEEE TRANSACTIONS ON SIGNAL PROCESSING, IEEE, INC. NEW YORK, US, vol. 51, no. 4, April 2003 (2003-04), pages 898-905, XP001171821 ISSN: 1053-587X**
• **ADELSBACH A ET AL: "Advanced techniques for dispute resolving and authorship proofs on digital works" PROCEEDINGS OF THE SPIE - THE INTERNATIONAL SOCIETY FOR OPTICAL ENGINEERING SPIE-INT. SOC. OPT. ENG USA, vol. 5020, 2003, pages 677-688, XP002346654 ISSN: 0277-786X**
• **ADELSBACH A ET AL: "On the insecurity of non-invertible watermarking schemes for dispute resolving" DIGITAL WATERMARKING. SECOND INTERNATIONAL WORKSHOP, IWDW 2003 REVISED PAPERS (LECTURE NOTES IN COMPUT. SCI. VOL.2939) SPRINGER-VERLAG BERLIN, GERMANY, 20 October 2003 (2003-10-20), pages 355-369, XP002346655 ISBN: 3-540-21061-X**

**Description**

The present invention concerns in general terms the watermarking of multimedia entities, in particular in the context of CDMA spread spectrum watermarking schemes. More particularly, the invention concerns the detection and proof of detection of a watermark in a multimedia entity.

A particularly advantageous favored, but not exclusive, application of the present invention is the watermarking of digital images, for example for the paid distribution of photographs over the Internet. This is because, in this type of application, it is necessary to be in a position to be able to prove the ownership of the photographs being distributed.

Establishing proof of detection of a watermark poses a particular technical difficulty. This is because proof of the presence of a watermark, for example in a suspect image, must be given without disclosing the mark and without supplying any information able to be used to break a cryptographic secret and erase the watermark from the suspect image.

The patent WO 2004/043072 describes a device having a formatting module to calculate watermarking information based on a calculated response of a transformed signal and code words associated with a message.

A modulator modulates amplitude of a carrier coefficient by a corresponding quantity related to energy weight of the message and carriers to provide a watermarking coefficient.

A summer adds the watermarking coefficient to the coefficient of the transformed signal. The formatting module calculates the response of the transformed signal during the demodulation of carriers, the carriers being defined by protection keys of the message.

According to another approach, zero-knowledge techniques have been proposed in order to overcome the above technical difficulty.

In the article « Zero-Knowledge Watermark Detection and Proof of Ownership », Proc. of Fourth International Workshop on Information Hiding, Berlin, 2001, A. Adelsbach and A-R. Sadeghi describe a watermark detection protocol. In this protocol, the presence of the watermark is proved by calculating a correlation product corr between the watermark and the suspect image, and proving that this correlation product *corr* is greater than a given threshold value δ. To ensure maximum security of the protocol, the correlation product corr is not disclosed by a so-called « Prover » entity.

In the Adelsbach protocol, the proof *corr* $\geq$ δ is achieved by zero-knowledge techniques. For this purpose, it is necessary for the Prover to engage on the watermark *WM* without for all that disclosing it. The engagement function of E. Fujisaki and T. Okamoto, having a homomorphic property, is used.

Thus, an engagement value, denoted *com(WM),* on the watermark *WM*, is calculated by the Prover and sent to a so-called « Verifier » The homomorphic property of the engagement function enables the «Verifier » to calculate an engagement value denoted *com(corr)* on the correlation product solely from the data of *com(WM)* and the suspect image, that is to say without knowing either *corr* or *WM*. It is the quantity *com(corr)*, which the Prover and the Verifier then share, that is proved by the Prover, with zero knowledge, as containing a value greater than the given threshold value δ.

In the Adelsbach protocol, for each suspect image, the Prover must engage on the watermark *WM*, which means that the engagement value *com(WM)* must be calculated and transmitted by the Prover at each new image whose ownership must be proved. In practice, this constraint constitutes a major drawback since the volume of data calculated, stored and exchanged is very great.

In the general context of spread spectrum watermarking techniques, the principles disclosed above remain valid. Nevertheless, more generally, the watermark is formed by a set of carriers modulated by bits of information representing information inserted by the watermark. The carriers constitute the secret S not to be disclosed. Given that the information inserted may be variable (or even unique) for each image, in particular in the case of informed watermarking schemes for which the bits of information may partly be dependent on the image, this means that a set of distinct watermarks may correspond to a set of carriers. Consequently, it becomes possible to use the secret S for a whole batch of images

A CDMA spread spectrum watermarking scheme is known to the inventors in which the watermark insertion space may be diverse, for example, the image space, the frequency space, etc. In this scheme, an original image is watermarked using carriers $G_j$, $1 \leq j \leq L$, typically $L$ = 128, which are generated randomly using a pseudo-random generator fed with a secret quantity called a « germ ». Each carrier $G_j$ comprises *Size* points, chosen so as to be modified in the insertion space of the watermark, each point $G_j(i)$, $1 \leq j \leq L$, $1 \leq i \leq Size,$ being equal to -1 or 1, and *Size* points being typically around 10,000. The carriers are « modulated » by a sequence of coefficients representing information inserted $\{b_j\}_{1 \leq j \leq L}$, $b_j \in \{-1, 1\}$ in order to form the watermark *WM* :

$$WM = (WM(1), \ldots, WM(Size)), \text{ with } WM(i) = \sum_{j=1}^{L} b_j \cdot G_j(i)$$

with

$$WM(i) \in \{-L, L\}, \ \forall 1 \leq i \leq Size.$$

In this watermarking scheme, the secret relates to the carriers $G_j(i)$, and the coefficients $b_j$ may be revealed. The carriers $G_j(i)$ may therefore be reused in order to watermark other images, for this purpose generating other coefficients $b_j$.

The application of the Adelsbach protocol to the above watermarking scheme entails the transmission by the Prover of engagement values $com(WM)$ corresponding to a watermark $WM$ comprising $Size$ components:

$$com(WM) = \{com(WM(i))\}_{1 \leq i < Size}.$$

The resources required by the volume of data calculated, stored and exchanged are therefore here relatively sizeable for the verification of each suspect image.

This is because the strict application of the Adelsbach protocol to the above watermarking scheme gives rise to an impracticable complexity in terms of time. In engaging on the watermark, it is necessary to engage on $Size$ values, that is to say $Size$ engagements to be calculated each time it is wished to prove the presence of a watermark in a suspect image. For example, for a single image of 100,000 points for which $Size$ = 10,000 points will have been chosen, given that each engagement has a size of 1,024 bits if the engagement function of Fujisaki et al. is used, the Verifier must receive approximately 10 Mbits.

The present invention as disclosed in the appended claims concerns firstly a watermark detention method which is used on the Verifier side and whose requirements in terms of resources are less great compared with the prior art.

The method according to the invention as disclosed in the appended claims for detecting a watermarks in a suspect multimedia entity is able to come from a multimedia entity in which a watermark has been inserted corresponding to a sequence of coefficients, carried by a plurality of secret carriers, the method being implemented in a watermark verification device, is characterized in that it comprises the steps of

- obtaining said sequence of coefficients corresponding to said watermark;
- calculating a detection quantity from a plurality of engagement values calculated by means of a homomorphic engagement function on the secret carriers, said coefficients and the suspect multimedia entity ; and
- detecting the presence of the watermark in the suspect multimedia entity from the detection quantity.

Correspondingly, the invention also concerns a watermark detection device for implementing the watermark detection method described briefly above.

The device according to the invention as disclosed in the appended claims for detecting a watermark in a suspect multimedia entity able to come from a multimedia entity in which a watermark has been inserted corresponding to a sequence of coefficients, carried by a plurality of secret carriers, is characterized in that it comprises :

- means for obtaining said sequence of coefficients corresponding to said watermark;
- means of calculating a detection quantity from a plurality of engagement values calculated by means of a homomorphic engagement function on the secret carriers, said coefficients and the suspect multimedia entity ; and
- means of detecting the presence of the watermark in the suspect multimedia entity from the detection quantity.

According to particular characteristics, the detection is carried out by proving that the detection quantity contains a value greater than or equal to a predetermined threshold value.

With $L$ = 128 carriers and Size = 10,000, the present invention requires the calculation of 128 x $Size$ engagement values on the carriers, but these engagement values can be used for the verification of a large number of suspect images, typically 100,000. For a batch of suspect images to be verified typically of 100,000, the storage is approximately 1,28 Gbits for the engagement values on the carriers, that is to say only 12,8 Kbits approximately per image. According to the invention, the Prover sends the engagement values on the carriers to the Verifier only once per batch of suspect images to be verified. The reduction in communication complexity per image is therefore of the order of 1,000 compare with the prior art.

According to another particular characteristic, the invention further comprises the reception, coming from a watermark insertion device, of a sequence of coefficients corresponding to the watermark, the calculation of the detection quantity using these coefficients.

The invention preferably comprises the reception of a correlation product coming from the watermark insertion device, the correlation product having been made between the watermark of the multimedia entity and the suspect multimedia entity; and the matching of the correlation product received and the detection quantity calculated, the detection of the presence of the watermark being a function of this matching. The invention further comprises a reception of a value calculated as a function of the suspect multimedia entity, the sequence of coefficients, and random values introduced during the calculation of the engagement values.

According to yet another particular characteristic of the invention, the detection is executed at a maximum a predetermined number of times with the same plurality of engagement values on the secret carriers for different suspect multimedia entities. The invention also concerns a watermark detection proving method which is implemented on the Prover side and does not have the drawback disclosed above of a significant use of resources.

The method according to the invention for proving watermark detection in a suspect multimedia entity able to come from a multimedia entity, the method being implemented in a watermark insertion device having previously inserted, in the multimedia entity, a watermark corresponding to a sequence of coefficients, carried by a plurality of secret carriers, is characterized in that it comprises the steps of
- obtaining the plurality of said secret carriers used for the insertion in the sequence of coefficients corresponding to said of the watermark;
- calculating a plurality of engagement values by means of a homomorphic engagement function on the secret carriers; and
- transmitting the plurality of engagement values on the secret carriers to a watermark detection device.

Correspondingly, the invention further concerns a watermark insertion device for implementing the watermark detection method briefly described above.

The device according to the invention as disclosed in the appended claims for inserting a watermark in a multimedia entity comprising means of inserting a watermark in the multimedia entity, a watermark corresponding to a sequence of coefficients, carried by a plurality of secret carriers and means of proving detection of watermarking in a suspect multimedia entity able to come from said multimedia entity, is characterized in that the means of proving detection of watermarking comprise:

means of obtaining the plurality of secret carriers used for the insertion in the sequence of coefficients corresponding to the watermark;
means of calculating a plurality of engagement values by means of a homomorphic engagement function on the secret carriers; and
means of transmitting the plurality of engagement values on the secret carriers to a watermarking detection device.

According to a particular characteristic, the invention further comprises a storage in memory of said plurality of engagement values on said secret carriers.

According to another particular characteristic, when the secret carriers on the engagement values are calculated, the engagement values are calculated by means of an engagement function having a homomorphic property.

According to yet another particular characteristic, when the engagement values on the secret carriers are calculated, the engagement values are calculated so as to be included in a discrete value space composed of N engagement values.

The number L of carriers is preferably around 128 and the number N of engagement values on the secret carriers is around 100,000, each engagement value preferably being used only once for a said secret carrier and at a maximum twice.

In the case of the watermarking of digital images, in accordance with the invention, the watermarks, secret carriers and sequence of coefficients corresponding respectively to the secret carriers, preferably satisfy the following equalities :

$$WM = [WM(1), \ldots, WM(i), \ldots, WM(Size)]$$

$$WM(i) = \sum_{j=1}^{L} b_j \cdot C_j(i)$$

in which :

*Size* is the number of points of the watermark insertion space,

*WM(1)* to *WM(Size)* represent the *Size* components of the watermark,

$G_1$ to $G_L$ represent a plurality of *L* secret carriers each having *Size* components, and

$b_1$ to $b_L$ represent a sequence of coefficients representing information inserted in the multimedia entity by the watermark.

According to other characteristics, the invention comprises, for a multimedia entity:

an obtaining of the watermark previously inserted for the multimedia entity;

an obtaining of the sequence of coefficients corresponding to the watermark thus obtained; and

a transmission of the sequence of coefficients to the watermark detection device.

According to yet other characteristics, the invention also comprises:

a calculation of a value according to the suspect multimedia entity, the sequence of coefficients and random values introduced during the calculation of the engagement values; and

a transmission of the value thus calculated, to the watermark detection device.

According to other aspects, the invention concerns information storage means and computer programs whose execution enables the methods of the invention described briefly above to be implemented.

The invention also offers embodiments adapted to the processing of multimedia entities in the form of data of the multi-resolution type comprising in particular image data and/or video data and/or audio data and/or text data.

Other aspects and advantages of the present invention will emerge more clearly from a reading of the following description of particular embodiments, this description being given solely by way of non-limiting example and made with reference to the accompanying drawings, in which :

**Fig.1** shows a block diagram of a first preferred embodiment of the watermarking detection and proof of detection methods according to the invention, in which a disclosure of a correlation product between suspect image and watermark participates ;

**Fig.2** shows a block diagram of a second preferred embodiment of the watermarking detection and proof of detection methods according to the invention, without disclosure of the correlation product ;

**Fig.3** shows a block diagram concerning another embodiment of the method according to the invention able to allow an additional reduction in the stored data, as the result of a limitation in space of the values of the engagements on the carriers ; and

**Fig.4** is a block diagram showing a preferred embodiment of the watermark insertion device or of the watermark detection device according to the invention constructed around a microcomputer.

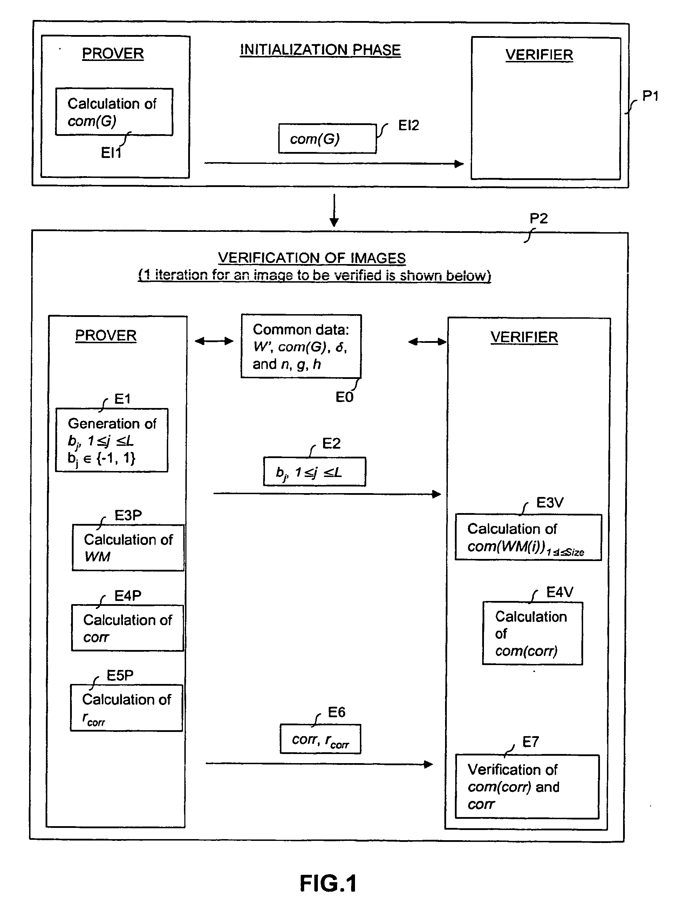

With reference to **Fig.1**, a description is now given of a first preferred embodiment of the methods according to the invention. In this first embodiment, proof of detection is given by the Prover by calculating and disclosing a correlation product corr and a value $r_{corr}$ transmitted to the Verifier.

As shown in Fig.1, the method according to the invention comprises an initialization phase P1 and an image verification phase P2.

In the initialization phase P1, the Prover calculates, at a step EI1, a plurality of engagement values *com*(*G*) = $\{com(G_j(i))\}_{1 \leq i \leq Size, \ 1 \leq j \leq L}$ on the values of the carriers $G_j(i) \in \{-1,1\}$.

According to the invention, the engagement values *com(G)* are calculated by means of a homomorphic engagement function. The engagement function of Fujisaki et al. which is used here and the engagement values *com(G)* are given by the following equality :

$$com(G_j(i)) = g^{G_j(i)} \cdot h^{r_{G_j(i)}} \bmod n$$

with,

$n = p.q,$ p and *q* being « secure » and secret prime numbers,

$g$ and $h$ being two generators of the cyclic sub-group G de $Z_n^\bullet$ of order $\lambda(n) = \left(\dfrac{p-1}{2}\right) \cdot \left(\dfrac{q-1}{2}\right)$ , and

$r_{Gj(i)}$ being an integer chosen randomly between 1 and $\lambda(n)$-1.

At a step EI2, the Prover transmits to the Verifier the engagement values *com(G)* calculated.

Fig.1 shows in the image verification phase P2, a single iteration of the methods of the invention corresponding to a verification between a watermark WM and a suspect image $W'$, each new image verification requiring the performance of such an iteration.

A prior step E0 allows to check that the Prover and Verifier are actually sharing the same common data for the calculations to be made, namely : *W', com(G)* and *n, g, h* and the threshold value δ.

The steps and operations performed on the Prover side are now more particularly described below.

At a step E1, a sequence of coefficients $b_j, 1 \le j \le L$ which are used for calculating the watermark WM, is read. According to the embodiments of the invention, the coefficients $b_j$ can for example directly code an identifier, or be obtained by an error detecting or correcting coding on an identifier, this coding being able to depend itself on the image.

At a step E2, the Prover transmits the coefficients $b_j$ to the Verifier.

After the generation of the coefficients *bj*, the Prover calculates the watermark *WM*, at a step E3P, by means of the following equalities :

$$WM = \big(WM(i)\big)_{1 \le i \le Size} ,$$

and

$$WM(i) = \sum_{j=1}^{L} b_j \cdot G_j(i)$$

The integer number *Size* being the number of points in the watermark insertion space.

It will be noted that the watermarking of the image preferably uses a spread spectrum technique of the CDMA type (Code Division Multiple Access).

At a step E4P, the correlation product corr between the watermark *WM* and the suspect image $W'$ is calculated with the equality :

$$corr = \sum_{i=1}^{Size} WM(i) \cdot W'(i) .$$

At a step E5P, the value $r_{corr}$ is calculated in the following manner:

$$r_{corr} = \sum_{i=1}^{Size} \sum_{j=1}^{L} W'(i) \cdot b_j \cdot r_{G_j(i)} .$$

The Prover next transmits to the Verifier the correlation product *corr* and the value $r_{corr}$ , at a step E6.

The steps and operations performed on the Verifier side are now more particularly described below.

At a step E3V, the Verifier calculates engagement values *com(WM(i))* on the values of the watermark *WM* :

$$com(WM(i)) = \prod_{j=1}^{L} com(G_j(i))^{b_j} \bmod n, \text{ for } 1 \le i \le Size .$$

At a following step E4V, an engagement value is calculated on the correlation, referred to as the detection quantity :

$$com(corr) = \prod_{i=1}^{Size} com(WM(i))^{W'(i)} \bmod n .$$

A step E7 concerning the verification of the value of *corr* is performed in order to finish by testing whether the value of *com(corr),* calculated at step E4V, is equal or not to the value $g^{corr} \cdot h^{r}corr \bmod n$ calculated by the Verifier from the data *corr* and $r_{corr}$ transmitted by the Prover at step E6.

In the case where $com(corr) = g^{corr} \cdot h^{r}corr \bmod n$ and $corr > \delta$, the proof of the presence of the watermark *WM* in the suspect image W' is considered to be given. In the case where one of these expressions is not verified, it is considered that the presence of the watermark *WM* in the suspect image *W'* is not proved.

In this first embodiment, the same engagement values *com(G)* on the carriers, transmitted during the initialization phase P1, can be used to verify a number of suspect images W' equal at a maximum to *L.Size - 1*. Preferably, for a better guarantee of secrecy, it is considered that the same engagement values *com(G)* can serve to test up to *L.Size -* 80 images. In other words, an initialization phase P1 is necessary every *L.Size -* 80 images verifications.

It should be noted that steps E3P, E4P and E5P on the one hand and steps E3V and E4V on the other hand are independent. These steps can therefore be performed in parallel.

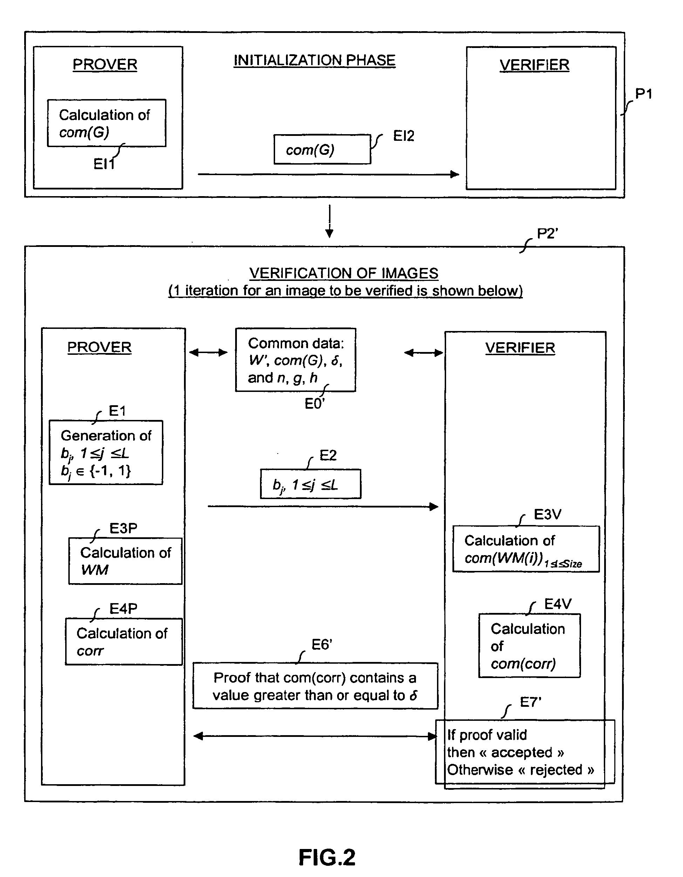

A second preferred embodiment of the method according to the invention is shown in **Fig.2**. These steps and operations indicated at Fig.2 with the same references are similar to those in Fig.1 and are not described further below.

In this second embodiment, proof of detection is given by the Prover without disclosing to the Verifier the value of the correlation product corr.

A zero-knowledge proof technique is used at step E6' in order to prove sufficiently that the suspect image *W'* contains the watermark *WM* by proving that the detection quantity *com(corr)* calculated by the Verifier contains a value greater than or equal to a threshold value δ. A step E7' takes a decision on the validity of the proof given.

As shown at step E0' corresponding to step E0 of Fig.1, the data *W', com(G), n, g, h* and δ are common to the Prover and Verifier.

In this second embodiment, the non-disclosure of the correlation product corr allows an unlimited use of the same engagement values com(G) on the carriers. This is because the same engagement values com(G) can here be used without any limitation on the number of times and the initialization phase P1 does therefore not need to be repeated in order to ensure a renewal of the values com(G).

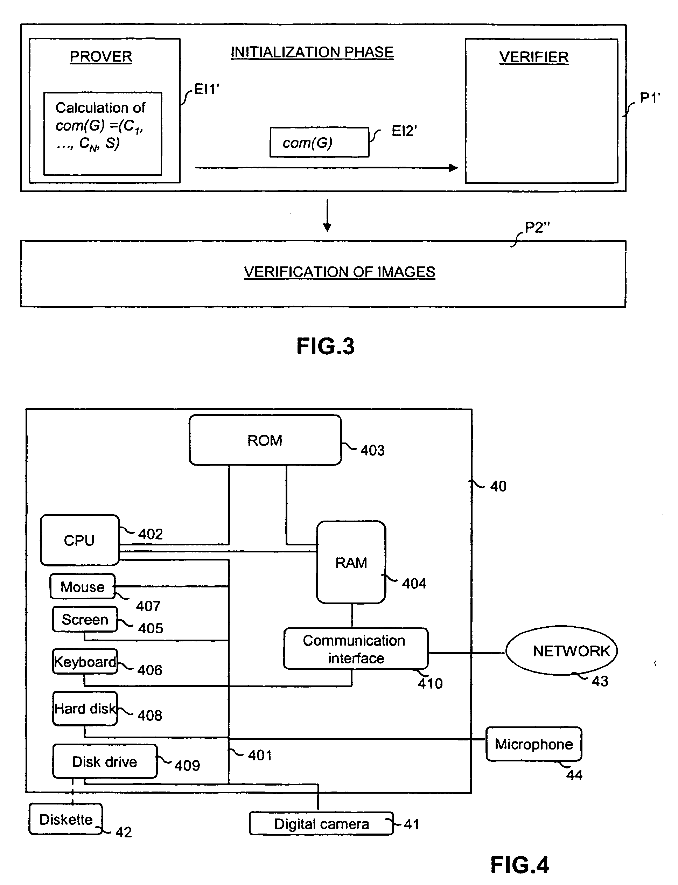

With reference to Fig.3, a description is now given of another embodiment of the methods of the invention incorporating a particular characteristic of the invention which is applied, non-exclusively, to the first and second embodiments of the method described above.

According to this characteristic of invention, the space of the engagement values *com(G)* on the carriers is reduced to a certain number of given discrete values. In other words, the engagement values *com(G)* can take only *N* given engagement values $C_1, ..., C_N$ .

This characteristic of the invention allows a reduction in the volume of the data stored. Having regard to the fact that the carriers $G_j(i)$ are -1 or 1, it suffices to engage on a space engaging *N* values, half of these approximately being -1 and the other half being 1. Then for each image, or for each batch of images, the Prover then merely has to send the sequence of numbers on the engagement values for the Verifier to be able to calculate *com(corr).* The data stored are the N engagement values and the sequence of numbers, which makes it possible to greatly reduce, according to the number of unknowns allowed, the volume of data stored.

This embodiment has limits. This is because, the smaller the number of data on which engagement takes place, the higher the number of redundancies generated in the engagement values on the carriers.

For example, by choosing N = 1,000 engagement values for L = 128, each engagement value will be reused on average 1,280 times. Such a reuse of the same engagement value may weaken the watermarking scheme.

A compromise must therefore be found between the reduction in the volume of data stored and the robustness of the watermarking scheme.

As shown in Fig.3, during the initialization phase P1', the Prover calculates, at step EI1', the N given engagement values $C_1, ..., C_N$ from the following equality:

$$C_u = g^{X_u} \cdot h^{r_u} \bmod n$$

in which, for $u \in \{1,...,N\}$, there is $X_u \in \{-1,1\}$ and $r_u$ which is a random value such that $r_u \in \{1,...,\lambda(n)-1\}$,

knowing that $\lambda(n) = \left(\dfrac{p-1}{2}\right) \cdot \left(\dfrac{q-1}{2}\right)$ ..

These values $C_1$, ..., $C_N$ of *com(G)* are then transmitted to the Verifier at step EI2'.

It should be noted that the list of indexes of the values to be attributed to the carriers is given by : $S = (S(i, j))_{1 \leq i \leq Size, \, 1 \leq j \leq L}$ with

$$S(i, j) \in \{1,\ldots,N\}, \; \forall i, \; \forall j .$$

The calculations performed in the image verification phase P2" in the case of the application of this characteristic of reduction of the space of the engagement values *com(G)* to the first embodiment of the method according to the invention are similar to those described in phase P2 with reference to Fig.1, with the exception however of the calculations of $r_{corr}$ and *com(WM(i))* at steps E4P and E3V, respectively, which are detailed below :

For calculating $r_{corr}$, the Prover applies the following equality :

$$r_{corr} = \sum_{i=1}^{Size} \sum_{j=1}^{L} W'(i) \cdot b_j \cdot r_{S(i,j)} .$$

For calculating *com(WM(i))*, the Verifier applies the following equality :

$$com(WM(i)) = \prod_{j=1}^{L} C_{S(i,j)}{}^{b_j} \bmod n , \text{ for } 1 \leq i \leq Size$$

In a similar manner to the first embodiment of the method according to the invention, in order to have better guarantee of secrecy, the same engagement values *com(G)* will be used to test at a maximum *F=N - 80* images. A new initialization phase P1' is therefore necessary every *F* image verifications with at a maximum *F=100,000*.

In the case of the application of the characteristic of reduction of the space of the engagement values *com(G)* to the second embodiment of the method according to the invention, the calculations performed in the image verification phase P2" are similar to those described in the phase P2' with reference to Fig.2, with the exception of the calculation of *com(WM(i))* by the Verifier, at step E3V, which is detailed below :

$$com(WM(i)) = \prod_{j=1}^{L} C_{S(i,j)}{}^{b_j} \bmod n , \text{ for } 1 \leq i \leq Size .$$

With reference to **Fig.4**, a description is now given by way of example of a particular hardware configuration of an information processing device able to implement the methods according to the invention. Such an information processing device, when it is equipped with a suitable program according to the invention, fully fulfils the function of a watermark insertion or watermark detection device according to the invention.

An information processing device implementing the invention is for example a microcomputer 40, or a workstation, connected to various peripherals.

The peripherals connected to the information processing device comprise for example a digital camera 41, or a scanner or any other image acquisition or storage means, connected to an input/output card (not shown) and supplying multimedia data to the information processing device.

The device 40 comprises a communication bus 401 to which there are connected:

- A central processing unit CPU 402 in the form for example of a microprocessor;
- A read only memory 403 in which there can be contained the programs whose execution enables the methods according to the invention to be implemented;

- A random access memory 404 which, after powering up of the device 40, contains the executable code of the programs of the invention as well as registers adapted to record variables and parameters necessary for implementing the invention;
- A screen 405 for displaying data and/or serving as a graphical interface with the user, who can thus interact with the programs of the invention, using a keyboard 406 or any other means such as a pointing device, such as for example a mouse 407 or an optical pen;
- A hard disk 408 or a storage memory, such as a memory of the compact flash type, able to contain the programs of the invention as well as data used or produced during the implementation of the invention;
- A optional disk drive 409, or other removable data medium drive, able to receive a diskette 42 and to read/write therein data processed or to be processed in accordance with the invention; and
- A communication interface 410 connected to a telecommunications network 43, the interface 410 being able to transmit and receive data.

In the case of audio data, the device 40 is preferably equipped with an input/output card (not shown) which is connected to a microphone 44.

The communication bus 401 allows communication and interoperability between the various elements included in the device 40 or connected to it. The representation of the bus 401 is not limiting and, in particular, the central unit 402 is able to communicate instructions to any element of the device 40 directly or by means of another element of the device 40.

The diskettes 42 can be replaced by any information medium such as, for example, a compact disk (CD-ROM), rewritable or not, a zip disk or a memory card. In general terms, an information storage means, which can be read by a microcomputer or by a microprocessor, integrated or not into the information processing device, possibly removable, is adapted to store one or more programs whose execution enables the methods according to the invention to be implemented.

The executable code enabling the information processing device to implement the invention can be stored either in read only memory 403, or on the hard disk 408 or on a removable digital medium such as for example a diskette 42 as described previously. According to a variant, the executable code of the programs is received by means of the telecommunications network 43 via the interface 410, in order to be stored in one of the storage means of the device 40 (such as the hard disk 408 for example) before being executed.

The central unit 402 controls and directs the execution of the instructions or portions of software code of the program or programs of the invention, the instructions or portions of software code being stored in one of the aforementioned storage means. When the device 40 is powered up, the program or programs which are stored in a non-volatile memory, for example the hard disk 408 or read only memory 403, are transferred into the random access memory 404, which then contains the executable code of the program or programs of the invention, as well as registers for storing the variables and parameters necessary for implementing the invention.

It should also be noted that the device implementing the invention or incorporating it can also be produced in the form of a programmed apparatus. For example, such a device can then contain the code of the computer program or programs in a fixed form in an application specific integrated circuit (ASIC).

**Claims**

1. A method of detecting watermarking in a suspect multimedia entity (W') able to come from a multimedia entity in which a watermark (WM) has been inserted corresponding to a sequence of coefficients ($b_1$ to $b_L$), carried by a plurality of secret carriers ($G_1$ to $G_L$), the method being implemented in a watermark verification device, and being **characterized in that** it comprises the steps of:

   obtaining said sequence of coefficients ($b_j$) corresponding to said watermark;
   calculating (E3V) engagement values on the values of the watermark (com(WM(i)), using:

   a plurality of engagement values (com(Gi)) calculated by means of a homomorphic engagement function on said secret carriers and
   said coefficients ($b_j$);

   calculating (E4V) a detection quantity (com(corr)) from said engagement values on the values of the watermark and the suspect multimedia entity (W'); and
   detecting the presence of said watermark (WM) in said suspect multimedia entity (W') from said detection quantity (com(corr)) by proving that the detection quantity contains a value greater than or equal to a predetermined threshold value ($\delta$).

2. A watermarking detecting method according to claim 1, **characterized in that** it also comprises the steps of:

receiving (E6) a correlation product (corr) coming from said watermark insertion device, the correlation product (corr) having been made between the watermark (WM) of the multimedia entity and the suspect multimedia entity (W'); and

matching (E7) the correlation product received (corr) and the detection quantity calculated, the detection of the presence of said watermark (WM) being a function of this matching.

3. A watermarking detecting method according to claim 2, **characterized in that** it further comprises a step of:

receiving (E6) a value ($r_{corr}$) calculated as a function of the suspect multimedia entity (W'), the sequence of coefficients ($b_j$), and random values ($r_u$) introduced during the calculation of the engagement values.

4. A watermarking detecting method according to any one of claims 1 to 3, **characterized in that** the detection step is executed at a maximum a predetermined number of times with the same said plurality of engagement values on said secret carriers for different suspect multimedia entities (W').

5. A watermarking detecting method according to any one of the preceding claims, **characterized in that** it further includes a step of receiving (EI2') said plurality of engagement values when transmitted by a device for proving detection of watermarking.

6. A method of proving detection of watermarking in a suspect multimedia entity (W') able to come from a multimedia entity, the method being implemented in a watermark insertion device having previously inserted, in the multimedia entity, a watermark (WM) corresponding to a sequence of coefficients ($b_1$ to $b_L$), carried by a plurality of secret carriers ($G_1$ to $G_L$) and being **characterized in that** it comprises the steps of:

obtaining (P1) the plurality of secret carriers ($G_1$ to $G_L$) used for inserting the sequence of coefficients corresponding to said watermark (WM);

calculating (EI1) a plurality of engagement values by means of a homomorphic engagement function on said secret carriers:

transmitting (E12) said plurality of engagement values on said secret carriers to a watermark verification device;

calculating (E4P) a correlation product between the watermark (WM) and the suspect multimedia entity (W');

proving (E6, E6') to the verification device that the correlation product is greater than a predetermined threshold.

7. A method according to claim 6, **characterized in that** it further comprises a step of:

storing in memory said plurality of engagement values on said secret carriers.

8. A method according to claim 6 or 7, **characterized in that**, in said step of calculating said engagement values on said secret carriers, said engagement values are calculated so as to be included in a space of discrete values composed of a number N of engagement values ($C_1$..... $C_N$).

9. A method according to claim 8, **characterized in that** the number L of carriers is around 128 and the number N of engagement values on said secret carriers is around 100,000, each said engagement value being used preferably only once for a said secret carrier and at a maximum twice.

10. A method according to any one of claims 6 to 9, applied to the watermarking of digital images, **characterized in that** said watermarks (WM), secret carriers (G) and sequence of coefficients ($b_j$) corresponding respectively to the secret carriers (G), satisfy the following equalities:

$$WM = [WM(1), ..., WM(i), ..., WM(Size)]$$

$$WM(i) = \sum_{j=1}^{L} b_j \cdot G_j(i)$$

in which:

Size is the number of points in the representation of the digital images used for watermarking,
WM(1) to WM(Size) represent the Size components of the watermark (WM),
$G_1$ to $G_L$ represent a plurality of L secret carriers each having Size components, and
$b_1$ to $b_L$ represent a sequence of coefficients representing information inserted in the multimedia entity by the watermark.

**11.** A method according to claim 10, **characterized in that**, for a multimedia entity (W'), it comprises the steps of:

obtaining (E3P) the watermarks (WM) previously inserted for the multimedia entity;
obtaining (E1) the sequence of coefficients ($b_1$ to $b_L$) corresponding to the watermark (WM) thus obtained; and
transmitting (E2) the sequence of coefficients ($b_1$ to $b_L$) to the watermark verification device.

**12.** A method according to any one of claims 6 to 11, **characterized in that** it further comprises the steps of:

calculating (E4P) a correlation product (corr) between the watermark (WM) of the multimedia entity and the suspect multimedia entity (W'); and
transmitting (E6) the correlation product thus calculated to the watermark verification device.

**13.** A method according to any one of claims 6 to 12, **characterized in that** it further comprises a step of:

calculating (E5P) a value ($r_{corr}$) according to the suspect multimedia entity (W'), the sequence of coefficients ($b_j$), and random values ($r_u$) introduced during the calculation of the engagement values;
transmitting (E6) the value ($r_{corr}$) thus calculated to the watermark verification device.

**14.** A device for detecting watermarking in a suspect multimedia entity (W') able to come from a multimedia entity in which a watermark (WM) has been inserted corresponding to a sequence of coefficients ($b_1$ to $b_L$), carried by a plurality of secret carriers ($G_1$ to $G_L$), said device being **characterized in that** it comprises:

means for obtaining said sequence of coefficients ($b_j$) corresponding to said watermark;
means for calculating engagement values on the values of the watermark (com(WM(i)), using:

a plurality of engagement values (com(Gi)) calculated by means of a homomorphic engagement function on said secret carriers and
said coefficients ($b_j$);

means for calculating a detection quantity (com(corr)) from said engagement values on the values of the watermark and the suspect multimedia entity (W'); and
means for detecting the presence of said watermark (WM) in said suspect multimedia entity (W') from said detection quantity (com(corr)) by proving that the detection quantity contains a value greater than or equal to a predetermined threshold value (δ).

**15.** A watermarking detecting device according to claim 14, **characterized in that** it further comprises:

reception means for receiving a correlation product (corr) coming from said watermark insertion device, the correlation product (corr) having been made between the watermark (WM) of the multimedia entity and the suspect multimedia entity (W'); and
means of matching the correlation product (corr) received and the detection quantity calculated, the detection of the presence of said watermark (WM) depending on this matching.

16. A watermarking detecting device according to claim 15, **characterized in that** it further comprises;

means of receiving a value ($r_{corr}$) calculated as a function of the suspect multimedia entity (W'), the sequence of coefficients ($b_j$), and random values ($r_u$) introduced during the calculation of the engagement values (com(G)).

17. A watermarking detecting device according to any one of claims 14 to 16, **characterized in that** it further includes means for receiving said plurality of engagement values when transmitted by a device for proving detection of watermarking.

18. A device for inserting watermarking in a multimedia entity comprising means of inserting, in said multimedia entity, a watermark (WM) corresponding to a sequence of coefficients ($b_1$ to $b_L$), carried by a plurality of secret carriers ($G_1$ to $G_L$) and means of proving detection of watermarking in a suspect multimedia entity (W') able to come from said multimedia entity, said device for inserting watermarking being **characterized in that** it comprises:

means for obtaining the plurality of secret carriers ($G_1$ to $G_L$) used for inserting the sequence of coefficients corresponding to said watermark (WM);
means for calculating a plurality of engagement values by means of a homomorphic engagement function on said secret carriers;
means for transmitting said plurality of engagement values on said secret carriers to a watermark verification device;
means for calculating a correlation product between the watermark (WM) and the suspect multimedia entity (W');
means for proving to the verification device that the correlation product is greater than a predetermined threshold.

19. A device according to claim 18, **characterized in that** it further comprises:

means of storing in memory said plurality of engagement values (com(G)) on said secret carriers.

20. A device according to claim 18 or 19, **characterized in that** said calculation means calculate said engagement values on said secret carriers so that they are included in a space of discrete values composed of a predetermined number N of engagement values ($C_1$, ..., $C_N$).

21. A device according to claim 20, **characterized in that** said means of obtaining said secret carriers ($G_1$ to $G_L$) obtain a number L of carriers of around 128 and a number N of engagement values (com(G)) on said secret carriers of around 100,000, each said engagement value (com(G)) preferably being used only once for a said secret carrier and at a maximum twice.

22. A device according to any one of claims 18 to 21, applied to the watermarking of digital images, **characterized in that** said means obtain and calculate said watermarks (WM), secret carriers (G) and sequence of coefficients ($b_j$) corresponding respectively to the secret carriers (G), so as to satisfy the following equalities:

$$WM = [WM(1), ..., WM(i), ..., WM(Size)]$$

$$WM(i) = \sum_{j=1}^{L} b_j \cdot G_j(i)$$

in which:

Size is the number of points in the representation of the digital images used for the watermarking,
WM(1) to WM(Size) represent the Size components of the watermark (WM),
$G_1$ to $G_L$ represent a plurality of L secret carriers each having Size components, and
$b_1$ to $b_L$ represent a sequence of coefficients representing information inserted in the multimedia entity by the watermark.

**23.** A device according to claim 22, **characterized in that** it further comprises, for processing a multimedia entity (W'):

means of obtaining the watermark (WM) previously inserted for the multimedia entity;
means of obtaining the sequence of coefficients ($b_1$ to $b_L$) corresponding to the watermark thus obtained; and
means of transmitting the sequence of coefficients ($b_1$ to $b_L$) to the watermarking verification device.

**24.** A device according to any one of claims 18 to 23, **characterized in that** it further comprises:

means of calculating a correlation product (corr) between the watermark (WM) of the multimedia entity and the suspect multimedia entity (W'); and
means of transmitting the correlation product thus calculated to the watermarking verification device.

**25.** A device according to any of claims 18 to 24, **characterized in that** it further comprises:

means of calculating a value ($r_{corr}$) according to the suspect multimedia entity (W'), the sequence of coefficients ($b_j$), and random values ($r_u$) introduced during the calculation of the engagement values;
means of transmitting the value ($r_{corr}$) thus calculated to the watermarking verification device.

**26.** An information processing device able to function as a watermarking detecting device according to any one of claims 14 to 17, comprising a central unit, a read only memory, a random access memory, an information storage unit and a communication interface for allowing connection to a telecommunications network;
**characterized in that** it further comprises means adapted to implement the method according to any one of claims 1 to 5.

**27.** An information processing device able to function as a watermark insertion device according any one of claims 18 to 25, comprising a central unit, a read only memory, a random access memory, an information storage unit and a communication interface for allowing connection to a telecommunication network:
**characterized in that** it further comprises means adapted to implement the method according to any one of claims 6 to 13.

**28.** An information storage means, **characterized in that** it stores a program whose execution implements the method according to any one of claims 1 to 5.

**29.** An information storage means according to claim 28, **characterized in that** it can be read by a device according to claim 26.

**30.** An information storage means, **characterized in that** it stores a program whose execution implements the method according to any one of claims 6 to 13.

**31.** An information storage means according to claim 30, **characterized in that** it can be read by a device according to claim 27.

**32.** A computer program on a storage means, comprising one or more sequences of instructions that can be executed by a computer, the execution of said computer program implementing the method according to any one of claims 1 to 5.

**33.** A computer program on a storage means, comprising one or more sequences of instructions that can be executed by a computer, the execution of said computer program implementing the method according to any of claims 6 to 13.

**Patentansprüche**

**1.** Verfahren des Erfassens einer Wasserzeichenmarkierung in einer verdächtigen Multimediaeinheit (W'), die von einer Multimediaeinheit stammen kann, in die ein Wasserzeichen (WM) eingefügt wurde, das einer Folge von Koeffizienten ($b_1$ bis $b_L$) entspricht, die durch eine Vielzahl von Geheimnisträgern ($G_1$ bis $G_L$) transportiert werden, wobei das Verfahren in einer Wasserzeichen-Verifikationsvorrichtung implementiert ist, und **dadurch gekennzeichnet, dass** es die Schritte aufweist:

Erhalten der Folge von Koeffizienten ($b_j$), die dem Wasserzeichen entspricht;

Berechnen (E3V) von Bindungswerten auf den Werten des Wasserzeichens (com(WM(i))) unter Verwendung von:

einer Vielzahl von Bindungswerten (com(Gi)), die mit Hilfe einer homomorphen Bindungsfunktion auf den Geheimnisträgern berechnet werden, und
den Koeffizienten ($b_j$);

Berechnen (E4V) eines Erfassungsmaßes (com(corr)) aus den Bindungswerten auf den Werten des Wasserzeichens und der verdächtige Multimediaeinheit (W'); und
Erfassen der Präsenz des Wasserzeichens (WM) in der verdächtigen Multimediaeinheit (W') aus dem Erfassungsmaß (com(corr)), indem nachgewiesen wird, dass das Erfassungsmaß einen Wert enthält, der größer oder gleich einem vorbestimmten Schwellenwert ($\delta$) ist.

2. Wasserzeichenmarkierung-Erfassungsverfahren gemäß Anspruch 1, **dadurch gekennzeichnet, dass** es auch die Schritte aufweist:

Empfangen (E6) eines Korrelationsprodukts (corr), das von der Wasserzeichen-Einfügungsvorrichtung stammt, wobei das Korrelationsprodukt (corr) zwischen dem Wasserzeichen (WM) der Multimediaeinheit und der verdächtigen Multimediaeinheit (W') gebildet wurde; und
Abgleichen (E7) des empfangenen Korrelationsprodukts (corr) und des berechneten Erfassungsmaßes, wobei die Erfassung der Präsenz des Wasserzeichens (WM) eine Funktion dieses Abgleichs ist.

3. Wasserzeichenmarkierung-Erfassungsverfahren gemäß Anspruch 2, **dadurch gekennzeichnet, dass** es ferner einen Schritt aufweist:

Empfangen (E6) eines Werts ($r_{corr}$), der als eine Funktion von der verdächtigen Multimediaeinheit (W'), der Folge von Koeffizienten ($b_j$) und Zufallswerten ($r_u$), die während der Berechnung der Bindungswerte eingeführt werden, berechnet wird.

4. Wasserzeichenmarkierung-Erfassungsverfahren gemäß einem der Ansprüche 1 bis 3, **dadurch gekennzeichnet, dass** der Erfassungsschritt höchstens in einer vorbestimmten Anzahl mit der gleichen Vielzahl von Bindungswerten auf den Geheimnisträgern für unterschiedliche verdächtige Multimediaeinheiten (W') ausgeführt wird.

5. Wasserzeichenmarkierung-Erfassungsverfahren gemäß einem der vorhergehenden Ansprüche, **dadurch gekennzeichnet, dass** es ferner einen Schritt zum Empfangen (EI2') der Vielzahl von Bindungswerten umfasst, wenn diese von einer Vorrichtung zum Nachweisen einer Erfassung einer Wasserzeichenmarkierung übertragen werden.

6. Verfahren des Nachweisens einer Erfassung einer Wasserzeichenmarkierung in einer verdächtige Multimediaeinheit (W'), die von einer Multimediaeinheit stammen kann, wobei das Verfahren in einer Wasserzeichen-Einfügungsvorrichtung implementiert ist, die in die Multimediaeinheit vorher ein Wasserzeichen- (WM) eingefügt hat, das einer Folge von Koeffizienten ($b_1$ bis $b_L$) entspricht, die durch eine Vielzahl von Geheimnisträgern ($G_1$ bis $G_L$) transportiert werden, und **dadurch gekennzeichnet, dass** es die Schritte aufweist:

Erhalten (P1) der Vielzahl von Geheimnisträgern ($G_1$ bis $G_L$), die zum Einfügen der Folge von Koeffizienten verwendet werden, die dem Wasserzeichen (WM) entspricht;
Berechnen (EI1) einer Vielzahl von Bindungswerten mit Hilfe einer homomorphen Bindungsfunktion auf den Geheimnisträgern;
übertragen (EI2) der Vielzahl von Bindungswerten auf den Geheimnisträgern an eine Wasserzeichen-Verifikationsvorrichtung;
Berechnen (E4P) eines Korrelationsprodukts zwischen dem Wasserzeichen (WM) und der verdächtigen Multimediaeinheit (W');
Nachweisen (E6, E6') gegenüber der Verifikationsvorrichtung, dass das Korrelationsprodukt größer als eine vorbestimmte Schwelle ist.

7. Verfahren gemäß Anspruch 6, **dadurch gekennzeichnet, dass** es ferner einen Schritt aufweist:

Speichern der Vielzahl von Bindungswerten auf den Geheimnisträgern in einem Speicher.

8. Verfahren gemäß Anspruch 6 oder 7, **dadurch gekennzeichnet, dass** in dem Schritt des Berechnens der Bindungswerte auf den Geheimnisträgern die Bindungswerte so berechnet werden, dass sie in einem Raum diskreter Werte enthalten sind, der aus einer Anzahl N von Bindungswerten ($C_1$, ..., $C_N$) aufgebaut ist.

9. Verfahren gemäß Anspruch 8, **dadurch gekennzeichnet, dass** die Anzahl L von Trägern ungefähr 128 beträgt und die Anzahl N von Bindungswerten auf den Geheimnisträgern ungefähr 100.000 beträgt, wobei jeder der Bindungswerte vorzugsweise nur einmal und höchstens zweimal für einen der Geheimnisträger verwendet wird.

10. Verfahren gemäß einem der Ansprüche 6 bis 9, das auf die Wasserzeichenmarkierung digitaler Bilder angewandt wird, **dadurch gekennzeichnet, dass**
die Wasserzeichen (WM), die Geheimnisträger (G) und die Folge von Koeffizienten ($b_j$), die jeweils den Geheimnisträgern (G) entsprechen, die folgenden Gleichungen erfüllen:

$$WM = [WM(1), \ldots, WM(i), \ldots, WM(Größe)]$$

$$WM(i) = \sum_{j=1}^{L} b_j \cdot G_j(i)$$

wobei gilt:

Größe ist die Anzahl von Punkten in der Darstellung der digitalen Bilder, die für eine Wasserzeichenmarkierung verwendet werden,
WM(1) bis WM(Größe) stellen die Größe Komponenten des Wasserzeichens (WM) dar,
$G_1$ bis $G_L$ stellen eine Vielzahl von L Geheimnisträgern dar, die jeweils Größe Komponenten aufweisen, und
$b_1$ bis $b_L$ stellen eine Folge von Koeffizienten dar, die von dem Wasserzeichen in die Multimediaeinheit eingefügte Informationen darstellen.

11. Verfahren gemäß Anspruch 10, **dadurch gekennzeichnet, dass** es für eine Multimediaeinheit (W') den Schritt aufweist:

Erhalten (E3P) des Wasserzeichens (WM), das vorher für die Multimediaeinheit eingefügt wurde;
Erhalten (E1) der Folge von Koeffizienten ($b_1$ bis $b_L$), die dem somit erhaltenen Wasserzeichen (WM) entspricht; und
Übertragen (E2) der Folge von Koeffizienten ($b_1$ bis $b_L$) an die Waeserzeichen-Verifikationsvorrichtung.

12. Verfahren gemäß einem der Ansprüche 6 bis 11, **dadurch gekennzeichnet, dass** es ferner die Schritte aufweist:

Berechnen (E4P) eines Korrelationsprodukts (corr) zwischen dem Wasserzeichen (WM) der Multimediaeinheit und der verdächtigen Multimediaeinheit (W'); und
Übertragen (E6) des somit berechneten Korrelationsprodukts an die Wasserzeichen-Verifikationsvorrichtung.

13. Verfahren gemäß einem der Ansprüche 6 bis 12, **dadurch gekennzeichnet, dass** es ferner einen Schritt aufweist:

Berechnen (E5P) eines Werts ($r_{corr}$) gemäß der verdächtigen Multimediaeinheit (W'), der Folge von Koeffizienten ($b_j$) und Zufallswerten ($r_u$), die während der Berechnung der Bindungswerte eingeführt werden,
Übertragen (E6) des somit berechneten Werts ($r_{corr}$) an die Wasserzeichen-Verifikationsvorrichtung.

14. Vorrichtung zur Erfassung einer Wasserzeichenmarkierung in einer verdächtigen Multimediaeinheit (W'), die von einer Multimediaeinheit stammen kann, in die ein Wasserzeichen (WM) eingefügt wurde, das einer Folge von Koeffizienten ($b_1$ bis $b_L$) entspricht, die durch eine Vielzahl von Geheimnisträgern ($G_1$ bis $G_L$) transportiert werden, **dadurch gekennzeichnet, dass** die Vorrichtung aufweist:

eine Einrichtung zum Erhalten der Folge von Koeffizienten ($b_j$), die dem Wasserzeichen entspricht;
eine Einrichtung zum Berechnen von Bindungswerten auf den Werten des Wasserzeichens (com(WM(i))) unter Verwendung von:

einer Vielzahl von Bindungswerte (com(Gi)), die mit Hilfe einer homomorphen Bindungsfunktion auf den Geheimnisträgern berechnet werden, und
den Koeffizienten ($b_j$) ;

eine Einrichtung zum Berechnen eines Erfassungsmaßes (com(corr)) aus den Bindungswerten auf den Werten des Wasserzeichens und der verdächtigen Multimediaeinheit (W') ;und
eine Einrichtung zum Erfassen der Präsenz des Wasserzeichens (WM) in der verdächtigen Multimediaeinheit (W') aus dem Erfassungsmaß (com(corr)), indem nachgewiesen wird, dass das Erfassungsmaß einen Wert enthält, der größer oder gleich einem vorbestimmten Schwellenwert ($\delta$) ist.

**15.** Wasserzeichenmarkierung-Erfassungsvorrichtung gemäß Anspruch 14, **dadurch gekennzeichnet, dass** sie ferner aufweist:

eine Empfangseinrichtung zum Empfangen eines Korrelationsprodukts (corr), das von der Wasserzeichen-Einfügungsvorrichtung stammt, wobei das Korrelationsprodukt (corr) zwischen dem Wasserzeichen (WM) der Multimediaeinheit und der verdächtigen Multimediaeinheit (W') gebildet wurde; und
eine Einrichtung zum Angleichen des empfangenen Korrelationsprodukts (corr) und des berechneten Erfassungsmaßes, wobei die Erfassung der Präsenz des Wasserzeichens (WM) von diesem Abgleich abhängt.

**16.** Wasserzeichenmarkierung-Erfassungsvorrichtung gemäß Anspruch 15, **dadurch gekennzeichnet, dass** sie ferner aufweist:

eine Einrichtung zum Empfangen eines Werts ($r_{corr}$), der als eine Funktion von der verdächtige Multimediaeinheit (W'), der Folge von Koeffizienten ($b_j$) und Zufallswerten ($r_u$), die während der Berechnung der Bindungswerte (com(G)) eingeführt werden, berechnet wird.

**17.** Wasserzeichenmarkierung-Erfassungsvorrichtung gemäß einem der Ansprüche 14 bis 16, **dadurch gekennzeichnet, dass** sie ferner eine Einrichtung zum Empfangen der Vielzahl von Bindungswerten umfasst, wenn diese von einer Vorrichtung zum Nachweisen einer Erfassung einer Wasserzeichenmarkierung übertragen werden.

**18.** Vorrichtung zur Einführung einer Wasserzeichenmarkierung in einer Multimediaeinheit mit einer Einrichtung zum Einfügen eines Wasserzeichens (WM) in der Multimediaeinheit, das einer Folge von Koeffizienten ($b_1$ bis $b_L$) entspricht, die durch eine Vielzahl von Geheimnisträgern ($G_1$ bis $G_L$) transportiert werden, und einer Einrichtung zum Nachweisen einer Erfassung einer Wasserzeichenmarkierung in einer verdächtigen Multimediaeinheit (W'), die von der Multimediaeinheit stammen kann, und die Vorrichtung zur Einfügung einer Nasserzeichenmarkierung ist **dadurch gekennzeichnet, dass** sie aufweist:

eine Einrichtung zum Erhalten der Vielzahl von Geheimnisträgern ($G_1$ bis $G_L$), die zum Einfügen der Folge von Koeffizienten verwendet werden, die dem Wasserzeichen (WM) entspricht;
eine Einrichtung zum Berechnen einer Vielzahl von Bindungswerten mit Hilfe einer homomorphen Bindungsfunktion auf den Geheimnisträgern;
eine Einrichtung zum Übertragen der Vielzahl von Bindungswerten auf den Geheimnisträgern an eine Wasserzeichen-Verifikationsvorrichtung;
eine Einrichtung zum Berechnen eines Korrelationsprodukts zwischen dem Wasserzeichen (WM) und der verdächtigen Multimediaeinheit (W');
eine Einrichtung zum Nachweisen gegenüber der Verifikationsvorrichtung, dass das Korrelationsprodukt größer als eine vorbestimmte Schwelle ist.

**19.** Vorrichtung gemäß Anspruch 18, **dadurch gekennzeichnet, dass** sie ferner aufweist:

eine Einrichtung zum Speichern der Vielzahl von Bindungswerten (com(G)) auf den Geheimnisträgern in einem Speicher.

**20.** Vorrichtung gemäß Anspruch 18 oder 19, **dadurch gekennzeichnet, dass** die Berechnungseinrichtung die Bindungswerte auf den Geheimnisträgern so berechnet, dass sie in einem Raum diskreter Werte enthalten sind, der aus einer vorbestimmten Anzahl N von Bindungswerten ($C_1$, ..., $C_N$) aufgebaut ist.

**21.** Vorrichtung gemäß Anspruch 20, **dadurch gekennzeichnet, dass** die Einrichtung zum Erhalten der Geheimnis-

träger ($G_1$ bis $G_L$) eine Anzahl L von Trägern von ungefähr 128 und eine Anzahl N von Bindungswerten (com(G)) auf den Geheimnisträgern von ungefähr 100.000 erhält, wobei jeder der Bindungswerte (com(G)) vorzugsweise nur einmal und höchstens zweimal für einen der Geheimnisträger verwendet wird.

**22.** Vorrichtung gemäß einem der Ansprüche 18 bis 21, die auf die Wasserzeichenmarkierung digitaler Bilder angewandt wird, **dadurch gekennzeichnet, dass**
die Einrichtung die Wasserzeichen (WM), die Geheimnisträger (G) und die Folge von Koeffizienten ($b_j$), die jeweils den Geheimnisträgern (G) entsprechen, so erhält und berechnet, dass die folgenden Gleichungen erfüllt sind:

$$WM = [WM(1), \ldots, WM(i), \ldots, WM(Größe)]$$

$$WM(i) = \sum_{j=1}^{L} b_j \cdot G_j(i)$$

wobei gilt:

Größe ist die Anzahl von Punkten in der Darstellung der digitalen Bilder, die für die Wasserzeichenmarkierung verwendet werden,
WM(1) bis WM(Größe) stellen die Größe Komponenten des Wasserzeichens (WM) dar,
$G_1$ bis $G_L$ stellen eine Vielzahl von L Geheimnisträgern dar, die jeweils Größe Komponenten aufweisen, und
$b_1$ bis $b_L$ stellen eine Folge von Koeffizienten dar, die von dem Wasserzeichen in die Multimediaeinheit eingefügte Informationen darstellen.

**23.** Vorrichtung gemäß Anspruch 22, **dadurch gekennzeichnet, dass** sie zur Verarbeitung einer Multimediaeinheit (W') ferner aufweist:

eine Einrichtung zum Erhalten des Wasserzeichens (WM), das vorher für die Multimediaeinheit eingefügt wurde;
eine Einrichtung zum Erhalten der Folge von Koeffizienten ($b_1$ bis $b_L$), die dem somit erhaltenen Wasserzeichen entspricht; und
eine Einrichtung zum Übertragen der Folge von Koeffizienten ($b_1$ bis $b_L$) an die Wasserzeichenmarkierung-Verifikationsvorrichtung.

**24.** Vorrichtung gemäß einem der Ansprüche 18 bis 23, **dadurch gekennzeichnet, dass** sie ferner aufweist:

eine Einrichtung zum Berechnen eines Korrelationsprodukts (corr) zwischen dem Wasserzeichen (WM) der Multimediaeinheit und der verdächtigen Multimediaeinheit (W'); und
eine Einrichtung zum Übertragen des somit berechneten Korrelationsprodukts an die Wasserzeichenmarkierung-Verifikationsvorrichtung.

**25.** Vorrichtung gemäß einem der Ansprüche 18 bis 24, **dadurch gekennzeichnet, dass** sie ferner aufweist:

eine Einrichtung zum Berechnen eines Werts ($r_{corr}$) gemäß der verdächtige Multimediaeinheit (W'), der Folge von Koeffizienten ($b_j$) und Zufallswerten ($r_u$), die während der Berechnung der Bindungswerte eingeführt werden;
eine Einrichtung zum Übertragen des somit berechneten Werts ($r_{corr}$) an die Wasserzeichenmarkierung-Verifikationsvorrichtung.

**26.** Informationsverarbeitungsvorrichtung, die im Stande ist, als eine Wasserzeichenmarkierung-Erfassungsvorrichtung gemäß einem der Ansprüche 14 bis 17 zu arbeiten, mit einer Zentraleinheit, einem Festwertspeicher, einem Direktzugriffsspeicher, einer Informationsspeichereinheit und einer Kommunikationsschnittstelle zum Ermöglichen einer Verbindung zu einem Telekommunikationsnetzwerk;
**dadurch gekennzeichnet, dass** sie ferner eine Einrichtung aufweist, die zum Implementieren des Verfahrens gemäß einem der Ansprüche 1 bis 5 angepasst ist.

**27.** Informationsverarbeitungsvorrichtung, die im Stande ist, als eine Wasserzeichen-Einfügungsvorrichtung gemäß einem der Ansprüche 18 bis 25 zu arbeiten, mit einer Zentraleinheit, einem Festwertspeicher, einem Direktzugriffsspeicher, einer Informationsspeichereinheit und einer Kommunikationsschnittstelle zum Ermöglichen einer Verbindung zu einem Telekommunikationsnetzwerk;
**dadurch gekennzeichnet, dass** sie ferner eine Einrichtung aufweist, die zum Implementieren des Verfahrens gemäß einem der Ansprüche 6 bis 13 angepasst ist.

28. Informationsspeichereinrichtung, **dadurch gekennzeichnet, dass** sie ein Programm speichert, dessen Ausführung das Verfahren gemäß einem der Ansprüche 1 bis 5 implementiert.

29. Informationsspeichereinrichtung gemäß Anspruch 28, **dadurch gekennzeichnet, dass** sie von einer Vorrichtung gemäß Anspruch 26 gelesen werden kann.

30. Informationsspeichereinrichtung, **dadurch gekennzeichnet, dass** sie ein Programm speichert, dessen Ausführung das Verfahren gemäß einem der Ansprüche 6 bis 13 implementiert.

31. Informationsspeichereinrichtung gemäß Anspruch 30, **dadurch gekennzeichnet, dass** sie von einer Vorrichtung gemäß Anspruch 27 gelesen werden kann.

32. Computerprogramm auf einer Speichereinrichtung, mit einer oder mehreren Folgen von Anweisungen, die von einem Computer ausgeführt werden können, wobei die Ausführung des Computerprogramms das Verfahren gemäß einem der Ansprüche 1 bis 5 implementiert.

33. Computerprogramm auf einer Speichereinrichtung, mit einer oder mehreren Folgen von Anweisungen, die von einem Computer ausgeführt werden können, wobei die Ausführung des Computerprogramms das Verfahren gemäß einem der Ansprüche 6 bis 13 implementiert.

**Revendications**

1. Procédé de détection de tatouage dans une entité multimédia suspecte (W') pouvant: provenir d'une entité multimédia dans laquelle a été insérée une marque de tatouage (WM) correspondant à une séquence de coefficients ($b_1$ à $b_L$), portée par une pluralité de porteuses secrètes ($G_1$ à $G_L$), le procédé étant mis en oeuvre dans un dispositif de vérification de tatouage, et étant **caractérisé en ce qu'**il comprend les étapes de :

   obtention de ladite séquence de coefficients ($b_j$) correspondant à ladite marque de tatouage ;
   calcul (E3V) de valeurs d'engagement sur les valeurs de la marque de tatouage (com(WM(i))), en utilisant :

      une pluralité de valeurs d'engagement (com(Gi)) calculées au moyen d'une fonction d'engagement homomorphique sur lesdites porteuses secrètes et
      lesdits coefficients ($b_j$) ;

   calcul (E4V) d'une quantité de détection (com(corr)) à partir desdites valeurs d'engagement sur les valeurs de la marque de tatouage et de l'entité multimédia suspecte (W') ; et
   détection de la présence de ladite marque de tatouage (WM) dans ladite entité multimédia suspecte (W') à partir de ladite quantité de détection (com(corr)) en prouvant que la quantité de détection contient une valeur supérieure ou égale à une valeur de seuil prédéterminée ($\delta$).

2. Procédé de détection de tatouage selon la revendication 1, **caractérisé en ce qu'**il comporte aussi les étapes de :

   réception (E6) d'un produit de corrélation (corr) provenant dudit dispositif d'insertion de tatouage, le produit de corrélation (corr) ayant été entre la maque de tatouage (WM) de l'entité multimédia et l'entité multimédia suspecte (W') ; et
   mise en correspondance (E7) du produit de corrélation reçu (corr) et de la quantité de détection calculée, la détection de la présence de ladite marque de tatouage (WM) étant fonction de cette mise en correspondance.

3. Procédé de détection de tatouage selon la revendication 2, **caractérisé en ce qu'**il comporte en outre une étape de :

   réception (E6) d'une valeur ($r_{corr}$) calculée en fonction de l'entité multimédia suspecte (W'), de la séquence de coefficients ($b_j$) et de valeurs aléatoires ($r_u$) introduites pendant le calcul des valeurs d'engagement.

**4.** Procédé de détection de tatouage selon l'une quelconque des revendications 1 à 3, **caractérisé en ce que** l'étape de détection est exécutée au maximum un nombre prédéterminé de fois avec la même dite pluralité de valeurs d'engagement sur lesdites porteuses secrètes pour des entités multimédias suspectes (W') différentes.

**5.** Procédé de détection de tatouage selon l'une quelconque des revendications précédentes, **caractérisé en ce qu'**il comporte en outre une étape de réception (EI2') de ladite pluralité de valeurs d'engagement lorsqu'elles sont transmises par un dispositif destiné à prouver la détection d'une marque de tatouage.

**6.** Procédé de preuve de détection de tatouage dans une entité multimédia suspecte (W') pouvant provenir d'une entité multimédia, le procédé étant mis en oeuvre dans un dispositif d'insertion de tatouage ayant au préalable inséré, dans l'entité multimédia, une marque de tatouage (WM) correspondant à une séquence de coefficients ($b_1$ à $b_L$), portée par une pluralité de porteuses secrètes ($G_1$ à $G_L$), et étant **caractérisé en ce qu'**il comporte les étapes de :

obtention (P1) de la pluralité de porteuses secrètes ($G_1$ à $G_L$) utilisées pour l'insertion de la séquence de coefficients correspondant à ladite marque de tatouage (WM) ;
calcul (EI1) d'une pluralité de valeurs d'engagement au moyen d'une fonction d'engagement homomorphique sur lesdites porteuses secrètes ;
transmission (EI2) de ladite pluralité de valeurs d'engagement sur lesdites porteuses secrètes à un dispositif de vérification de tatouage ;
calcul (E4P) d'un produit de corrélation entre la marque de tatouage (WM) et l'entité multimédia suspecte (W') ;
preuve (E6, E6') au dispositif de vérification que le produit de corrélation est supérieur à un seuil prédéterminé.

**7.** Procédé selon la revendication 6, **caractérisé en ce qu'**il comporte en outre une étape de :

stockage en mémoire de ladite pluralité de valeurs d'engagement sur lesdites porteuses secrètes.

**8.** Procédé selon la revendication 6 ou 7, **caractérisé en ce que**, dans ladite étape de calcul desdites valeurs d'engagement sur lesdites porteuses secrètes, lesdites valeurs d'engagement sont calculées de façon à être incluses dans un espace de valeurs discrètes composées d'un nombre N de valeurs d'engagement ($C_1$, ... , $C_N$).

**9.** Procédé selon la revendication 8, **caractérisé en ce que** le nombre L de porteuses est d'environ 128 et le nombre N de valeurs d'engagement sur lesdites porteuses secrètes est d'environ 100 000, chaque dite valeur d'engagement étant utilisée de préférence une seule fois pour une dite porteuse secrète et au maximum deux fois.

**10.** Procédé selon l'une quelconque des revendications 6 à 9, appliqué au tatouage d'images numériques, **caractérisé en ce que** :

lesdites marques de tatouage (WM), porteuses secrètes (G) et séquence de coefficients ($b_j$) correspondant respectivement aux porteuses secrètes (G), satisfont aux égalités suivantes :

$$\mathtt{WM \;=\; [WM(1),\; \ldots,\; WM(i),\; \ldots,\; WM(Size)]}$$

$$WM(i) = \sum_{j=1}^{L} b_j \cdot G_j(i)$$

dans lesquelles :

Size est le nombre de points dans la représentation des images numériques utilisées pour le tatouage,
WM(1) à WM(Size) représentent: les Size composantes de la marque de tatouage (WM),
$G_1$ à $G_L$ représentent une pluralité de L porteuses secrètes ayant chacune Size composantes, et
$b_1$ à $b_L$ représentent une séquence de coefficients représentatifs d'une information insérée dans l'entité multimédia par la marque de tatouage.

**11.** Procédé selon la revendication 10, **caractérisé en ce que**, pour une entité multimédia (W'), il comporte les étapes de :

obtention (E3P) de la marque de tatouage (WM) insérée au préalable pour l'entité multimédia ;

obtention (E1) de la séquence de coefficients ($b_1$ à $b_L$) correspondant à la marque de tatouage (WM) ainsi obtenue ; et

transmission (E2) de la séquence de coefficients ($b_1$ à $b_L$) au dispositif de vérification de tatouage.

**12.** Procédé selon l'une quelconque des revendications 6 à 11, **caractérisé en ce qu'**il comporte en outre les étapes de :

calcul (E4P) d'un produit de corrélation (corr) entre la marque de tatouage (WM) de l'entité multimédia et l'entité multimédia suspecte (W') ; et

transmission (E6) du produit de corrélation ainsi calculé au dispositif de vérification de tatouage.

**13.** Procédé selon l'une quelconque des revendications 6 à 12, **caractérisé en ce qu'**il comporte en outre une étape de :

calcul (E5P) d'une valeur ($r_{corr}$) en fonction de l'entité multimédia suspecte (W'), de la séquence de coefficients ($b_j$) et de valeurs aléatoires ($r_u$) introduites pendant le calcul des valeurs d'engagement ;

transmission (E6) de la valeur ($r_{corr}$) ainsi calculée au dispositif de vérification de tatouage.

**14.** Dispositif de détection de tatouage dans une entité multimédia suspecte (W') pouvant provenir d'une entité multimédia dans laquelle a été insérée une marque de tatouage (WM) correspondant à une séquence de coefficients ($b_1$ à $b_L$) , portée par une pluralité de porteuses secrètes ($G_1$ à $G_L$), ledit dispositif étant **caractérisé en ce qu'**il comporte :

des moyens pour obtenir ladite séquence de coefficients ($b_j$) correspondant à ladite marque de tatouage ;

des moyens pour calculer des valeurs d'engagement sur les valeurs de la marque de tatouage (com(WM(i))), en utilisant :

une pluralité de valeurs d'engagement (com(Gi)) calculées au moyen d'une fonction d'engagement homomorphique sur lesdites porteuses secrètes et

lesdits coefficients ($b_j$) ;

des moyens de calcul d'une quantité de détection (com(corr)) à partir desdites valeurs d'engagement sur les valeurs de la marque de tatouage et de l'entité multimédia suspecte (W') ; et

des moyens de détection de la présence de ladite marque de tatouage (WM) dans ladite entité multimédia suspecte (W') à partir de ladite quantité de détection (com(corr)) en prouvant que la quantité de détection contient une valeur supérieure ou égale à une valeur de seuil prédéterminée ($\delta$).

**15.** Dispositif de détection de tatouage selon la revendication 14, **caractérisé en ce qu'**il comporte en outre :

des moyens de réception pour recevoir un produit de corrélation (corr) provenant dudit dispositif d'insertion de tatouage, le produit de corrélation (corr) ayant été effectué entre la marque de tatouage (WM) de l'entité multimédia et l'entité multimédia suspecte (W') ; et

des moyens de mise en correspondance du produit de corrélation (corr) reçu et de la quantité de détection calculée, la détection de la présence de ladite marque de tatouage (WM) étant fonction de cette mise en correspondance.

**16.** Dispositif de détection de tatouage selon la revendication 15, **caractérisé en ce qu'**il comporte en outre :

des moyens de réception d'une valeur ($r_{corr}$) calculée en fonction de l'entité multimédia suspecte (W'), de la séquence de coefficients ($b_j$) et de valeurs aléatoires ($r_u$) introduites pendant le calcul des valeurs d'engagement (com(G)).

**17.** Dispositif de détection de tatouage selon l'une quelconque des revendications 14 à 16, **caractérisé en ce qu'**il comporte en outre des moyens de réception de ladite pluralité de valeurs d'engagement lorsqu'elles sont transmises par un dispositif destiné à prouver une détection de tatouage.

**18.** Dispositif d'insertion de tatouage dans une entité multimédia comprenant des moyens d'insertion, dans ladite entité multimédia, d'une marque de tatouage (WM) correspondant à une séquence de coefficients ($b_1$ à $b_L$), portée par une pluralité de porteuses secrètes ($G_1$ à $G_L$) et des moyens de preuve de détection de tatouage dans une entité multimédia suspecte (W') pouvant provenir de ladite entité multimédia, ledit dispositif d'insertion de tatouage étant **caractérisé en ce qu'**il comporte :

des moyens d'obtention de la pluralité de porteuses secrètes ($G_1$ à $G_L$) utilisées pour l'insertion de la séquence de coefficients correspondant à ladite marque de tatouage (WM) ;
des moyens de calcul d'une pluralité de valeurs d'engagement au moyen d'une fonction d'engagement homomorphique sur lesdites porteuses secrètes ;
des moyens de transmission de ladite pluralité de valeurs d'engagement sur lesdites porteuses secrètes à un dispositif de vérification de tatouage ;
des moyens de calcul d'un produit de corrélation entre la marque de tatouage (WM) et l'entité multimédia suspecte (W')
des moyens de preuve au dispositif de vérification que le produit de corrélation est supérieur à un seuil prédéterminé.

**19.** Dispositif selon la revendication 18, **caractérisé en ce qu'**il comporte en outre :

des moyens de stockage en mémoire de ladite pluralité de valeurs d'engagement (com(G)) sur lesdites porteuses secrètes.

**20.** Dispositif selon la revendication 18 ou 19, **caractérisé en ce que** lesdits moyens de calcul calculent lesdites valeurs d'engagement sur lesdites porteuses secrètes afin qu'elles soient comprises dans un espace de valeurs discrètes composé d'un nombre prédéterminé N de valeurs d'engagement ($C_1$, ... , $C_N$).

**21.** Dispositif selon la revendication 20, **caractérisé en ce que** lesdits moyens d'obtention desdites porteuses secrètes ($G_1$ à $G_L$) obtiennent un nombre L de porteuses de l'ordre de 128 et un nombre N de valeurs d'engagement (com (G)) sur lesdites porteuses secrètes de l'ordre de 100 000, chaque dite valeur d'engagement (com(G)) étant utilisée de préférence une seule fois pour une dite porteuse secrète et au maximum deux fois.

**22.** Dispositif selon l'une quelconque des revendications 18 à 21, appliqué au tatouage d'images numériques, **caractérisé en ce que** :

lesdits moyens obtiennent et calculent lesdites marques de tatouage (WM), porteuses secrètes (G) et séquence de coefficients ($b_j$) correspondant respectivement aux porteuses secrètes (G), de manière à satisfaire aux égalités suivantes :

$$WM = [WM(1), ..., WM(i), ..., WM(Size)]$$

$$WM(i) = \sum_{j=1}^{L} b_j \cdot G_j(i)$$

dans lesquelles :

Size est le nombre de points dans la représentation des images numériques utilisées pour le tatouage,
WM(1) à WM(Size) représentent les Size composantes de la marque de tatouage (WM),
$G_1$ à $G_L$ représentent une pluralité de L porteuses secrètes ayant chacune Size composantes, et $b_1$ à $b_L$ représentent une séquence de coefficients représentatifs d'une information insérée dans l'entité multimédia par la marque de tatouage.

**23.** Dispositif selon la revendication 22, **caractérisé en ce qu'**il comporte en outre, pour le traitement d'une entité multimédia (W') :

des moyens d'obtention de la marque de tatouage (WM) insérée au préalable pour l'entité multimédia ;
des moyens d'obtention de la séquence de coefficients ($b_1$ à $b_L$) correspondant à la marque de tatouage ainsi obtenue ; et
des moyens de transmission de la séquence de coefficients ($b_1$ à $b_L$) au dispositif de vérification de tatouage.

**24.** Dispositif selon l'une quelconque des revendications 18 à 23, **caractérisé en ce qu'**il comporte en outre ;

des moyens de calcul d'un produit de corrélation (corr) entre la marque de tatouage (WM) de l'entité multimédia et l'entité multimédia suspecte (W') ; et
des moyens de transmission du produit de corrélation ainsi calculé au dispositif de vérification de tatouage.

**25.** Dispositif selon l'une quelconque des revendications 18 à 24, **caractérisé en ce qu'**il comporte en outre :

des moyens de calcul d'une valeur ($r_{corr}$) en fonction de l'entité multimédia suspecte (W'), de la séquence de coefficients ($b_j$) et de valeurs aléatoires ($r_u$) introduites lors du calcul des valeurs d'engagement ;
des moyens de transmission de la valeur ($r_{corr}$) ainsi calculée au dispositif de vérification de tatouage.

**26.** Dispositif de traitement d'information apte à fonctionner en tant que dispositif de détection de tatouage selon l'une quelconque des revendications 14 à 17, comportant une unité centrale, une mémoire morte, une mémoire vive, une unité de stockage d'information et une interface de communication pour autoriser une connexion à un réseau de télécommunications ;
**caractérisé en ce qu'**il comporte en outre des moyens adaptés à mettre en oeuvre le procédé selon l'une quelconque des revendications 1 à 5.

**27.** Dispositif de traitement d'information apte à fonctionner en tant que dispositif d'insertion de tatouage selon l'une quelconque des revendications 18 à 25, comportant une unité centrale, une mémoire morte, une mémoire vive, une unité de stockage d'information et une interface de communication pour autoriser une connexion à un réseau de télécommunications ;
**caractérise en ce qu'**il comporte en outre des moyens adaptés à mettre en oeuvre le procédé selon l'une quelconque des revendications 6 à 13.

**28.** Moyen de stockage d'information, **caractérisé en ce qu'**il mémorise un programme dont l'exécution met en oeuvre le procédé selon l'une quelconque des revendications 1 à 5.

**29.** Moyen de stockage d'information selon la revendication 28, **caractérisé en ce qu'**il peut être lu par un dispositif selon la revendication 26.

**30.** Moyen de stockage d'information, **caractérisé en ce qu'**il mémorise un programme dont l'exécution met en oeuvre le procédé selon l'une quelconque des revendications 6 à 13.

**31.** Moyen de stockage d'information selon la revendication 30, **caractérisé en ce qu'**il peut être lu par un dispositif selon la revendication 27.

**32.** Programme d'ordinateur sur un moyen de stockage, comportant une ou plusieurs séquences d'instructions pouvant être exécutées par un ordinateur, l'exécution dudit programme d'ordinateur mettant en oeuvre le procédé selon l'une quelconque des revendications 1 à 5.

**33.** Programme d'ordinateur sur un moyen de stockage, comportant une ou plusieurs séquences d'instructions pouvant être exécutées par un ordinateur, l'exécution dudit programme d'ordinateur mettant en oeuvre le procédé selon l'une quelconque des revendications 6 à 13.

**FIG.1**

PROVER

INITIALIZATION PHASE

VERIFIER

P1

Calculation of
*com(G)*

EI1

*com(G)* — EI2

---

P2'

VERIFICATION OF IMAGES
(1 iteration for an image to be verified is shown below)

PROVER

Common data:
*W'*, *com(G)*, $\delta$,
and *n, g, h*

E0'

VERIFIER

E1

Generation of
$b_j$, $1 \leq j \leq L$
$b_j \in \{-1, 1\}$

E2

$b_j$, $1 \leq j \leq L$

E3V

Calculation of
$com(WM(i))_{1 \leq i \leq Size}$

E3P

Calculation of
*WM*

E4V

Calculation
of
*com(corr)*

E4P

Calculation of
*corr*

E6'

Proof that com(corr) contains a
value greater than or equal to $\delta$

E7'

If proof valid
then « accepted »
Otherwise « rejected »

**FIG.2**

| PROVER | INITIALIZATION PHASE | VERIFIER |
|---|---|---|

Calculation of $com(G) = (C_1, \ldots, C_N, S)$

EI1'

$com(G)$ — EI2'

P1'

P2"

VERIFICATION OF IMAGES

## FIG.3

ROM — 403

40

CPU — 402

RAM — 404

Mouse — 407

Screen — 405

Keyboard — 406

Communication interface — 410

NETWORK — 43

Hard disk — 408

Microphone — 44

Disk drive — 409 — 401

Diskette — 42

Digital camera — 41

## FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004043072 A

### Non-patent literature cited in the description

- **A. ADELSBACH ; A-R. SADEGHI.** Zero-Knowledge Watermark Detection and Proof of Ownership. *Proc. of Fourth International Workshop on Information Hiding,* 2001